# FASCICULE DE BREVET EUROPEEN

(11) **EP 3 363 695 B1**
(45) Date de publication et mention de la délivrance du brevet: **11.03.2020**
(21) Numéro de dépôt: 18156393.3
(22) Date de dépôt: 13.02.2018
(51) Int. Cl.: B60S 1/34

(54) **DISPOSITIF D ENTRAÎNEMENT EN ROTATION D'UN BRAS D ESSUIE-GLACE, NOTAMMENT POUR UN PARE-BRISE PANORAMIQUE**
VORRICHTUNG ZUM ROTATIONSANTRIEB EINES SCHEIBENWISCHERARMS, INSBESONDERE FÜR EINE PANORAMAWINDSCHUTZSCHEIBE
DRIVE DEVICE FOR DRIVING THE ROTATION OF A WIPER ARM, PARTICULARLY FOR A PANORAMIC WINDSCREEN

(30) Priorité: 16.02.2017 FR 1751261
(43) Date de publication de la demande: 22.08.2018
(73) Titulaire: Valeo Systèmes d'Essuyage, 78322 Le Mesnil Saint Denis (FR)
(72) Inventeur: GIRAUD, Frédéric, 78322 LE MESNIL SAINT DENIS (FR)
(74) Mandataire: Valeo Systèmes d'Essuyage

(56) Documents cités:
- EP-A1- 0 832 799
- EP-A1- 3 124 337
- EP-A2- 1 939 054
- FR-A1- 2 686 848

## Description

### DOMAINE TECHNIQUE DE L'INVENTION

L'invention concerne un dispositif d'entraînement en rotation dans les deux sens d'un bras d'essuie-glace et notamment d'un bras d'essuie-glace de pare-brise de véhicule automobile.

### ARRIERE PLAN TECHNIQUE DE L'INVENTION

L'invention concerne plus particulièrement un système d'essuyage pour véhicule automobile, particulièrement adapté à l'essuyage de pare-brise de surface complexe, tel qu'un pare-brise panoramique.

Un pare-brise est dit panoramique lorsqu'il comprend des portions d'extrémités latérales qui reviennent sur les cotés du véhicule, et présente donc de chaque coté une zone galbée de très forte courbure.

Pour ce type de pare-brise, le problème qui se pose est de pouvoir essuyer efficacement non seulement la face avant du vitrage, généralement à faible courbure, mais aussi ses portions d'extrémités latérales à très forte courbure.

Le balai d'essuie-glace comporte une structure apte à imposer à la raclette ou lame d'essuyage d'être en contact sur toute sa longueur avec la surface de la vitre. La structure permet en outre d'assurer que la pression de contact de la raclette d'essuyage contre la vitre soit sensiblement homogène sur toute la longueur de la raclette.

A cet effet, la structure, qu'elle soit articulée ou du type dit "flat-blade", est déformable dans un plan qui est sensiblement perpendiculaire à la vitre à essuyer et elle maintient, la raclette dans ce plan de déformation.

Toutefois, lorsque le balai d'essuie-glace parcourt la vitre dans son mouvement de balayage rotatif alterné, le plan de déformation de sa structure articulée ne reste pas rigoureusement perpendiculaire au plan de la vitre à essuyer, du fait du galbe de la vitre, si bien que la raclette est en contact avec la vitre selon un angle qui varie en fonction de la position de l'essuie-glace.

L'un des critères permettant d'obtenir un essuyage de qualité réside dans l'angle d'attaque du balai et de la raclette d'essuyage, à savoir l'inclinaison du balai au niveau de son point de liaison avec le bras porte-balai par rapport à la normale à la surface du pare-brise.

Lors d'un balayage complet dans un sens allant de la position de repos de l'essuie-glace à la position extrême, une amélioration de la qualité d'essuyage est obtenue s'il est possible de faire varier cet angle d'attaque du balai en fonction de la zone de pare-brise dans laquelle se trouve la lame ou raclette d'essuyage de la surface extérieure du pare-brise.

De nombreuses conceptions du dispositif d'entraînement du balai d'essuie-glace permettant de faire varier l'angle d'attaque du balai ont déjà été proposés.

On connaît notamment du document FR-A1-2.753.942 un système d'essuyage d'une vitre de véhicule automobile, du type dans lequel un bras d'entraînement est entraîné en rotation alternée dans les deux sens au moyen d'un dispositif d'entraînement qui comporte :
- un corps de palier ;
- un arbre d'entraînement qui est monté à rotation autour de son axe par rapport au corps de palier ;
- un boîtier de guidage de l'arbre d'entraînement en rotation autour de son axe qui est monté pivotant par rapport au corps de palier autour d'un axe qui est orthogonal à l'axe de l'arbre d'entraînement ;

- un moteur d'entraînement en rotation dans les deux sens de l'arbre d'entraînement autour de son axe ;
- un mécanisme qui provoque le pivotement de l'arbre d'entraînement pour faire varier l'inclinaison de l'axe de l'arbre par rapport au palier en fonction de la position angulaire de l'arbre autour de son axe de rotation,

Ce dispositif connu assure le guidage de l'arbre d'entraînement en rotation autour de son axe d'entraînement, et d'autre part, provoque une variation de l'inclinaison de l'axe d'entraînement par rapport à un axe de référence fixe par rapport au corps du palier et sensiblement perpendiculaire au plan de la vitre, en fonction de la position angulaire de l'arbre d'entraînement autour de son axe

A titre d'exemple, le mécanisme est un mécanisme à came qui commande le pivotement de l'arbre d'entraînement pour faire varier l'inclinaison de l'axe de l'arbre d'entraînement par rapport à l'axe de référence en fonction de la position angulaire de l'arbre d'entraînement autour de son axe de rotation.

Dans un tel système d'essuyage, le moteur d'entraînement agit sur une timonerie comportant une manivelle d'entraînement dont une extrémité de commande est portée par l'arbre d'entraînement auquel elle est liée en rotation.

L'état de la technique comprend aussi le document EP 1 939 054 A2, qui décrit un dispositif d'entraînement selon le préambule de la revendication 1.

La présente invention a pour but de proposer un dispositif d'entraînement simple et compact, facilement adaptable à toutes configurations de pare-brise et notamment en fonction de la conformation du pare-brise est des zones et de l'espace disponibles pour l'implantation du dispositif d'entraînement sur le véhicule.

### BREF RESUME DE L'INVENTION

L'invention propose un dispositif du type mentionné précédemment, caractérisé en ce que le moteur d'entraînement est porté par le boîtier de guidage, avec lequel il est mobile en pivotement par rapport au corps de palier. Le mécanisme comporte un pignon qui est porté par l'arbre d'entraînement auquel il est lié en rotation, et une crémaillère complémentaire qui est portée par le corps de palier.

Ainsi, le moteur - tel que par exemple un moteur électrique - est mobile en pivotement avec le boîtier de guidage (dont il est solidaire).

Selon d'autres caractéristiques de l'invention :
- le boîtier de guidage loge des éléments de transmission qui transforment la rotation d'un arbre de sortie du moteur en un mouvement de rotation de l'arbre d'entraînement autour de son axe ;
- le moteur est un moteur électrique ;
- l'arbre de sortie du moteur est orthogonal à l'arbre d'entraînement.
- l'axe de pivotement du boîtier de guidage par rapport au corps de palier et l'axe de rotation de l'arbre de sortie du moteur sont coplanaires ;
- la crémaillère est fixe par rapport au corps de palier ;
- le rapport de transmission entre le pignon et la crémaillère varie en fonction de la position angulaire du pignon par rapport à la crémaillère.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue latérale d'un mode de réalisation d'un dispositif d'entraînement selon l'invention dont les différents éléments et composants sont illustrés de manière schématique ;
- la figure 2 est une bue de dessus du dispositif de la figure 1 ;
- la figure 3 est une vue latérale de gauche du dispositif de la figure 1 ;
- la figure 4 est une vue analogue à celle de la figure 3 sur laquelle le boîtier de guidage a pivoté angulairement d'un angle alpha par rapport au corps de palier ;
- la figure 5 est une vue analogue à celle de la figure 2 sur laquelle le boîtier de guidage a pivoté angulairement de l'angle alpha par rapport au corps de palier ;
- la figure 6 illustre de manière schématique l'orientation de la raclette ou lame d'essuyage par rapport à la surface extérieure d'une vitre à essuyer dans une première zone de celle-ci ;
- la figure 7 est une vue analogue à celle de la figure 6 qui illustre l'orientation de la raclette ou lame d'essuyage par rapport à la surface extérieure d'une vitre à essuyer dans une deuxième zone de celle-ci qui est inclinée par rapport à la première zone ;
- les figures 8A à 8C sont trois schémas illustrant trois exemples de variantes de conception de l'ensemble pignon-crémaillère ;
- les figures 9A à 9C sont trois diagrammes illustrant la variation de la vitesse angulaire de pivotement du boîtier de guidage en fonction de la position angulaire de l'arbre d'entraînement du balai d'essuie-glace, chaque diagramme 9A à 9C étant associé a la variante illustrée au schéma 8A à 8C respectivement.

### DESCRIPTION DETAILLEE DES FIGURES

Dans la suite de la description, des éléments présentant une structure identique ou des fonctions analogues seront désignés par des mêmes références.

Dans la suite de la description, on adoptera de manière non limitative des orientations longitudinale, verticale et transversale indiquées par le trièdre "L,V,T" des figures. On définit aussi un plan horizontal qui s'étend longitudinalement et transversalement.

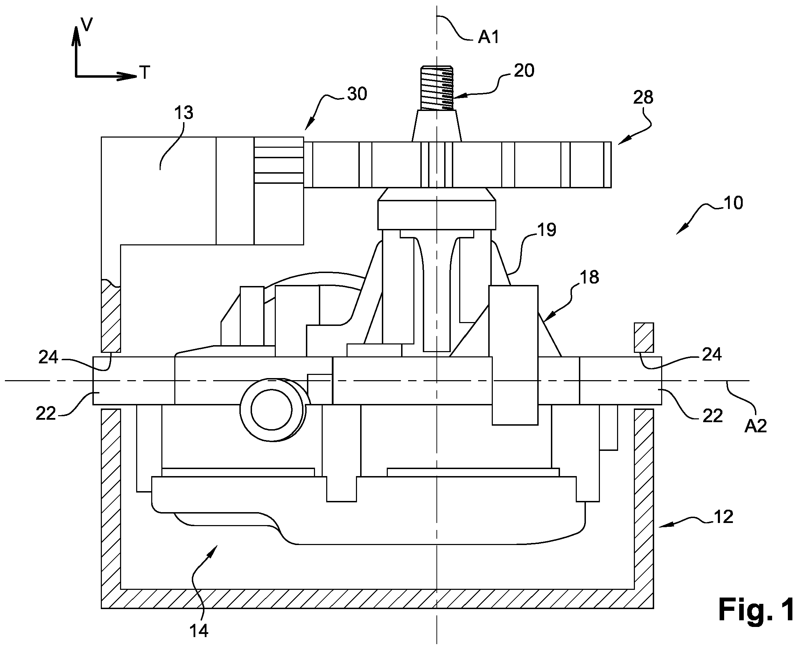

On a représenté aux figures 1 à 3 un dispositif d'entraînement 10 pour entraîner en rotation alternée dans les deux sens, autour d'un axe de rotation A1, un bras d'essuie-glace non représenté.

Le dispositif d'entraînement 10 comporte un palier 12, ou corps de palier 12, qui est destiné à être agencé et fixé par exemple à proximité d'une vitre à essuyer du côté interne d'un panneau de carrosserie (non représenté).

Pour l'entraînement en rotation du bras d'essuie-glace, le dispositif d'entraînement 10 comporte un ensemble moto réducteur 14 qui est constitué d'un moteur électrique 16 et d'un réducteur 18.

Le moteur électrique 16 comporte un arbre de sortie, ou arbre d'induit, non représenté en détail qui est apte à tourner dans les deux sens autour de l'axe A3.

De manière connue, le réducteur 18 permet d'une part d'assurer une démultiplication du régime de rotation de l'arbre de sortie du moteur électrique 16 et, d'autre part, d'entraîner en rotation un arbre d'entraînement 20, ou arbre de sortie, qui est montée à rotation dans les deux sens par rapport au boîtier 19 du réducteur 18.

De plus, dans le mode de réalisation illustrée aux figures, le réducteur 18 assure une fonction de renvoi d'angle de telle manière que l'axe de rotation A1 est orthogonal à l'axe de rotation A3 de l'arbre de sortie du moteur électrique 16.

Le boîtier 19 du moto réducteur 18 et ainsi un boîtier de guidage en rotation de l'arbre d'entraînement 20 qui loge différents composants et éléments de transmission qui transforment la rotation alternée dans les deux sens de l'arbre de sortie du moteur électrique 16 autour de son axe de rotation A3 en un mouvement de rotation alternée dans les deux sens de l'arbre d'entraînement 20, autour de son axe A1.

Conformément aux enseignements de l'invention, le boîtier 19 de guidage de l'arbre d'entraînement en rotation 20 autour de son axe A1 est monté pivotant par rapport au corps de palier 12 autour d'un axe A2 qui est orthogonal à l'axe Aide l'arbre d'entraînement 20.

À cet effet, comme cela est illustré de manière schématique aux figures, le boîtier 19 du réducteur 18 qui porte le moteur électrique 16 comporte deux pions cylindriques d'articulation en pivotement 22 qui sont transversalement opposés et qui sont alignés selon l'axe A2.

Chaque pion de pivotement 22 est monté à rotation dans un trou de guidage 24 formé dans le corps de palier 12. Ainsi, le boîtier 19 du réducteur 18 qui porte le moteur électrique 16 - et donc l'ensemble moto réducteur 14 - est monté pivotant librement, autour de l'axe A2, par rapport au corps de palier 12.

À titre non limitatif, l'axe A2 de pivotement du boîtier 19 par rapport au corps de palier 12 et l'axe A3 de rotation de l'arbre de sortie du moteur électrique 16 sont coplanaires.

De manière à provoquer le pivotement de l'ensemble moto réducteur 14, et donc de l'arbre d'entraînement 20, par rapport au corps de palier 12 - en fonction de la position angulaire de l'arbre d'entraînement 10 autour de son axe de rotation à À1 - le dispositif d'entraînement 10 comporte un mécanisme 26 du type a pignon 28 et crémaillère 30.

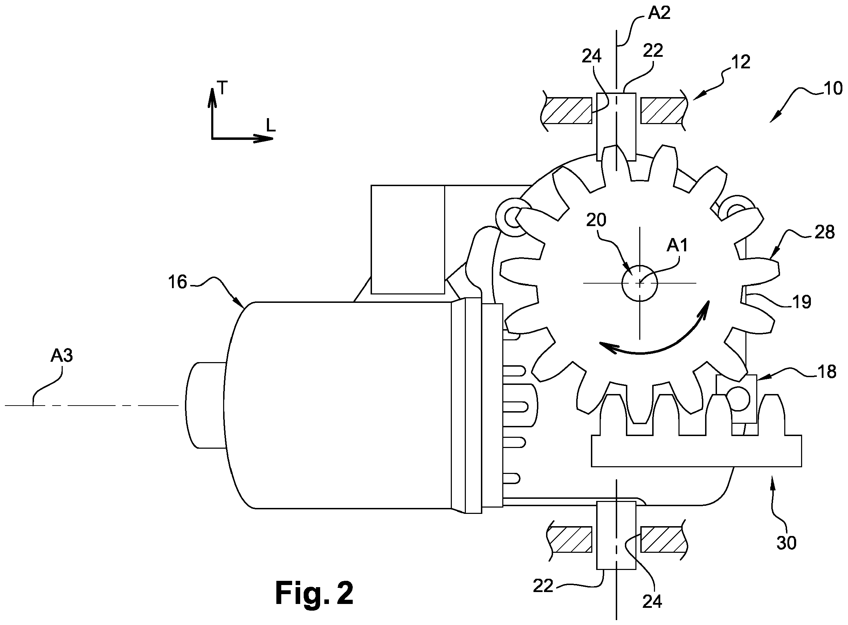

Le pignon 28 est ici porté par l'arbre d'entraînement 20 auquel il est lié en rotation dans les deux sens comme indiqué par la flèche de la figure 2.

Le pignon 28 est ici un pignon à denture droite qui s'étend dans un plan perpendiculaire à l'axe A1.

La crémaillère 30 est ici une crémaillère fixe qui est fixée sur une partie 13 du corps de palier 12 comme schématisés à la figure 1.

La crémaillère 30 est conçue de manière complémentaire à la denture du pignon 28 et elle est positionnée dans l'espace par rapport à ce dernier de telle manière que le pignon 28 est toujours en engrènement avec la crémaillère 30.

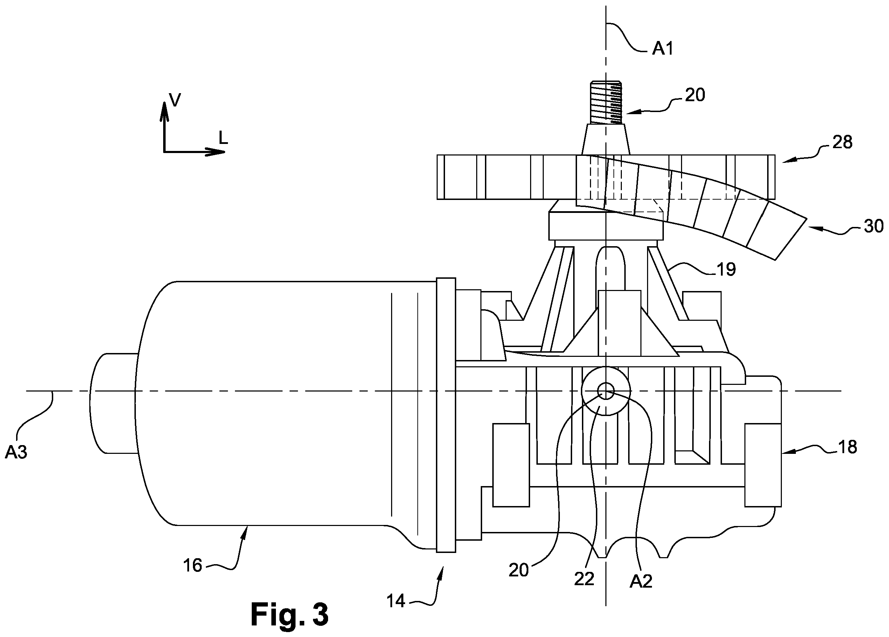

À cet effet, et comme on peut le voir notamment à la figure 3, la crémaillère 30 présente un profil en arc de cylindre autour de l'axe A2 de pivotement du boîtier 19 du réducteur 18 du moto réducteur 14 par rapport au corps de palier 12 sur lequel est fixé la crémaillère 30.

La crémaillère 30 étant fixe, par réaction mécanique, dès que l'arbre d'entraînement 20 est entraîné en rotation dans l'un ou l'autre sens, autour de son axe A1, par le moteur électrique 16, la coopération de la denture du pignon 28 avec la denture complémentaire de la crémaillère fixe 30 provoque un entraînement pivotement du boîtier 19 autour de l'axe A2.

Le mécanisme a pignon et crémaillère permet ainsi de commander « l'inclinaison » de l'axe à un de l'arbre d'entraînement 20 par rapport au corps de palier 12.

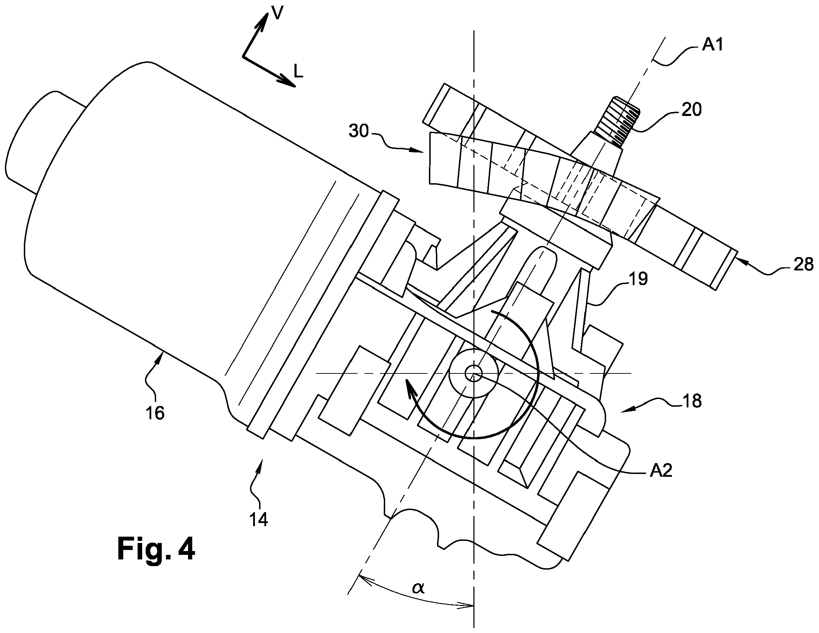

Ceci est illustré à la figure 4 sur laquelle on peut constater une inclinaison d'un angle alpha - autour de l'axe A2 - de l'axe à un de l'arbre d'entraînement 20 par rapport à sa position initiale illustrée à la figure 3.

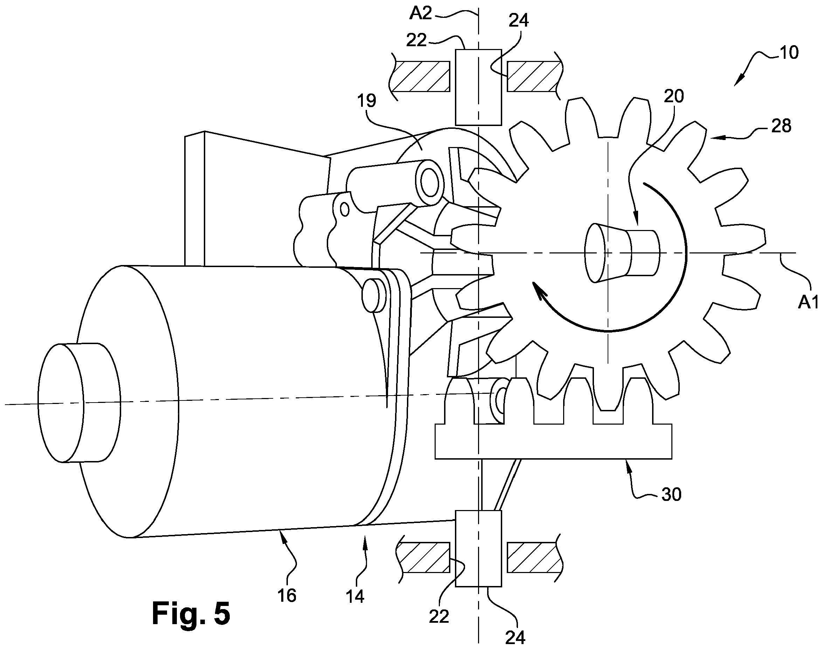

Cette même variation d'inclinaison d'un angle alpha est aussi visible en comparant la figure 5 à la figure 2.

L'inversion du sens de rotation du moteur électrique 16, et donc de l'arbre d'entraînement 20, provoque une rotation relative du pignon 28 par rapport à la crémaillère 30 dans l'autre sens, et donc un pivotement dans l'autre sens du boîtier 19 du réducteur 18 du moto réducteur 14 par rapport au corps de palier 12.

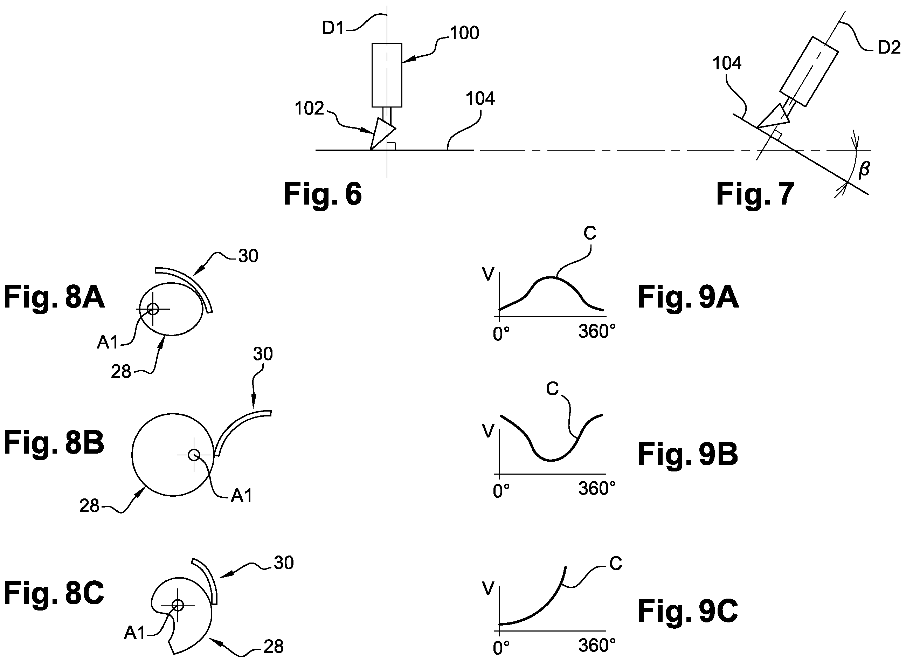

On a représenté de manière schématique aux figures 6 et 7 l'effet obtenu grâce aux mouvements de pivotement et d'inclinaison de l'arbre d'entraînement 20 pour la qualité de l'essuyage.

On a représenté de manière schématique un balai d'essuie-glace 100 porté par le bras d'essuie-glace entraîné en balayage alterné par l'arbre d'entraînement 20, qui porte une raclette d'essuyage 102 pour l'essuyage de la surface extérieure 104 d'une vitre à essuyé tels qu'un pare-brise galbé.

Lorsque l'inclinaison de l'arbre d'entraînement 20 correspond par exemple à la position des composants et éléments des figures 1 à 3, le balai d'essuie-glace 100 est dans une zone centrale du pare-brise et le balai d'essuie-glace 100 avec la raclette d'essuyage 102 s'étend globalement selon une direction D1 qui est localement orthogonale au plan de la surface extérieure 104 du pare-brise.

Lors du mouvement de balayage de la surface du pare-brise galbé par entraînement en rotation du bras d'essuie-glace, le balai d'essuie-glace 100 peut atteindre, comme illustré à la figure 7, une autre zone du pare-brise dans laquelle localement, la surface extérieure 104 forme un angle bêta par rapport à la zone 104 précédemment balayée et essuyée.

Grâce au pivotement et à l'inclinaison obtenue de l'axe de l'arbre A1 d'entraînement 20, le balai d'essuie-glace 100 avec la raclette d'essuyage 102 s'étend globalement D2 qui est localement orthogonale au plan de la surface extérieure 104 du pare-brise.

S'agissant des variants de conception des ensembles pignon 28 et crémaillère 30 illustré aux figures 8A, 8B et 8C on a représenté de manière schématique aux figures 9A, 9B et 9C la variation de la vitesse angulaire de pivotement "V" en fonction de l'angle de rotation du pignon 28.

Au premier exemple des figures 8A et 9A, le pignon 28 est en forme d'ellipse avec son axe de rotation correspondant sensiblement à un foyer.

Au deuxième exemple des figures 8B et 9B, le pignon 28 et a pignon à denture droite circulaire mais son axe d'entraînement est excentré.

Au troisième exemple des figures 8C et 9C, la denture du pignon 28 s'étend selon une courbe logarithmique.

À chaque fois, le pignon 28 est associé à une crémaillère de profil complémentaire notamment de façon à assurer en permanence la coopération et l'entraînement des deux composants.

A titre de variante non représentée, le boîtier de guidage en rotation de l'arbre d'entraînement 20 pourrait être conçu sans renvoi d'angle, c'est à dire avec l'arbre d'entraînement 20 parallèle à l'axe A3, par exemple sous la forme d'un couvercle d'extrémité du boîtier du moteur électrique.

## Revendications

1. Dispositif (10) d'entraînement en rotation dans les deux sens d'un essuie-glace, qui comporte :
- un corps de palier (12) ;
- un arbre d'entraînement (20) qui est monté à rotation autour de son axe (A1) par rapport au corps de palier (12) ;
- un boîtier (19) de guidage de l'arbre d'entraînement (20) en rotation autour de son axe (A1) qui est monté pivotant par rapport au corps de palier (12) autour d'un axe (A2) qui est orthogonal à l'axe (A1) de l'arbre d'entraînement (20) ;
- un moteur (16) d'entraînement en rotation dans les deux sens de l'arbre d'entraînement (20) autour de son axe (A1) ;
- un mécanisme (28, 30) qui provoque le pivotement de l'arbre d'entraînement (20) pour faire varier l'inclinaison (alpha) de l'axe (A1) de l'arbre d'entraînement (20) par rapport au corps de palier (12) en fonction de la position angulaire de l'arbre d'entraînement (20) autour de son axe de rotation (A1),
**caractérisé en ce que** le moteur (16) d'entraînement est porté par le boîtier (19) de guidage et **en ce que** le mécanisme comporte un pignon (28) qui est porté par l'arbre d'entraînement (20) auquel il est lié en rotation, et une crémaillère (30) complémentaire qui est portée par le corps de palier (12).

2. Dispositif (10) d'entraînement selon la revendication 1, **caractérisé en ce que** le boîtier (19) de guidage loge des éléments de transmission qui transforment la rotation d'un arbre de sortie du moteur (16) en un mouvement de rotation de l'arbre d'entraînement (20) autour de son axe (A1).

3. Dispositif (10) d'entraînement selon la revendication 2, **caractérisé en ce que** le moteur d'entraînement (16) est un moteur (16) électrique.

4. Dispositif (10) d'entraînement selon l'une des revendications 2 ou 3, **caractérisé en ce que** l'arbre de sortie (A3) du moteur d'entraînement (16) est orthogonal à l'arbre d'entraînement (20).

5. Dispositif (10) d'entraînement selon l'une quelconque des revendications 2 à 4, **caractérisé en ce que** l'axe (A2) de pivotement du boîtier (19) de guidage par rapport au corps de palier (12) et l'axe (A3) de rotation de l'arbre de sortie du moteur d'entraînement (16) sont coplanaires.

6. Dispositif (10) d'entraînement selon l'une quelconque des revendications précédentes, **caractérisé en ce que** la crémaillère (30) est fixe par rapport au corps de palier (12).

7. Dispositif (10) d'entraînement selon l'une quelconque des revendications précédentes, **caractérisé en ce que** le rapport de transmission entre le pignon (28) et la crémaillère (30) varie en fonction de la position angulaire du pignon (28) par rapport à la crémaillère (30).

## Patentansprüche

1. Vorrichtung (10) zum Rotationsantrieb eines Scheibenwischers in den zwei Richtungen, welche aufweist:
- ein Lagergehäuse (12);
- eine Antriebswelle (20), welche drehbar um ihre Achse (A1) in Bezug auf das Lagergehäuse (12) gelagert ist;
- ein Gehäuse (19) zur Führung der Antriebswelle (20) bei der Drehung um ihre Achse (A1), welches in Bezug auf das Lagergehäuse (12) schwenkbar um eine Achse (A2) angebracht ist, welche orthogonal zur Achse (A1) der Antriebswelle (20) ist;
- einen Motor (16) zum Rotationsantrieb der Antriebswelle (20) um ihre Achse (A1) in den zwei Richtungen;
- einen Mechanismus (28, 30), welcher die Schwenkung der Antriebswelle (20) hervorruft, um eine Änderung der Neigung (alpha) der Achse (A1) der Antriebswelle (20) in Bezug auf das Lagergehäuse (12) in Abhängigkeit von der Winkelposition der Antriebswelle (20) um ihre Drehachse (A1) zu bewirken,
**dadurch gekennzeichnet, dass** der Antriebsmotor (16) von dem Führungsgehäuse (19) getragen wird, und dadurch, dass der Mechanismus ein Ritzel (28), welches von der Antriebswelle (20) getragen wird, mit welcher es drehfest verbunden ist, und eine komplementäre Zahnstange (30), welche von dem Lagergehäuse (12) getragen wird, aufweist.

2. Antriebsvorrichtung (10) nach Anspruch 1, **dadurch gekennzeichnet, dass** das Führungsgehäuse (19) Übertragungselemente aufnimmt, welche die Drehung einer Abtriebswelle des Motors (16) in eine Drehbewegung der Antriebswelle (20) um ihre Achse (A1) umwandeln.

3. Antriebsvorrichtung (10) nach Anspruch 2, **dadurch gekennzeichnet, dass** der Antriebsmotor (16) ein Elektromotor (16) ist.

4. Antriebsvorrichtung (10) nach einem der Ansprüche 2 oder 3, **dadurch gekennzeichnet, dass** die Abtriebswelle (A3) des Antriebsmotors (16) orthogonal zu der Antriebswelle (20) ist.

5. Antriebsvorrichtung (10) nach einem der Ansprüche 2 bis 4, **dadurch gekennzeichnet, dass** die Schwenkachse (A2) des Führungsgehäuses (19) in Bezug auf das Lagergehäuse (12) und die Drehachse (A3) der Abtriebswelle des Antriebsmotors (16) koplanar sind.

6. Antriebsvorrichtung (10) nach einem der vorhergehenden Ansprüche, **dadurch gekennzeichnet, dass** die Zahnstange (30) in Bezug auf das Lagergehäuse (12) fest ist.

7. Antriebsvorrichtung (10) nach einem der vorhergehenden Ansprüche, **dadurch gekennzeichnet, dass** das Übersetzungsverhältnis zwischen dem Ritzel (28) und der Zahnstange (30) in Abhängigkeit von der Winkelposition des Ritzels (28) in Bezug auf die Zahnstange (30) variiert.

## Claims

1. Drive device (10) for driving the two-directional rotation of a windscreen wiper, which comprises:
- a bearing body (12);
- a drive shaft (20) which is mounted to rotate about its axis (A1) with respect to the bearing body (12);
- a guide housing (19) for guiding the drive shaft (20) in rotation about its axis (A1) which is pivot-mounted with respect to the bearing body (12) about an axis (A2) which is orthogonal to the axis (A1) of the drive shaft (20);
- a drive motor (16) for driving the two-directional rotation of the drive shaft (20) about its axis (A1);
- a mechanism (28, 30) which causes the drive shaft (20) to pivot in order to vary the inclination (α) of the axis (A1) of the drive shaft (20) with respect to the bearing body (12) according to the angular position of the drive shaft (20) about its axis of rotation (A1),
**characterized in that** the drive motor (16) is supported by the guide housing (19) and **in that** the mechanism (28, 30) comprises a pinion (28) which is supported by the drive shaft (20) to which it is rotationally connected, and a complementary rack (30) which is supported by the bearing body (12).

2. Drive device (10) according to Claim 1, **characterized in that** the guide housing (19) houses transmission elements which convert the rotation of an output shaft of the motor (16) into a rotational movement of the drive shaft (20) about its axis (A1).

3. Drive device (10) according to Claim 2, **characterized in that** the drive motor (16) is an electric motor (16).

4. Drive device (10) according to one of Claims 2 and 3, **characterized in that** the output shaft (A3) of the drive motor (16) is orthogonal to the drive shaft (20).

5. Drive device (10) according to any one of Claims 2 to 4, **characterized in that** the axis (A2) of pivoting of the guide housing (19) with respect to the bearing body (12) and the axis (A3) of rotation of the output shaft of the drive motor (16) are coplanar.

6. Drive device (10) according to any one of the preceding claims, **characterized in that** the rack (30) is fixed with respect to the bearing body (12).

7. Drive device (10) according to any one of the preceding claims, **characterized in that** the transmission ratio between the pinion (28) and the rack (30) varies according to the angular position of the pinion (28) with respect to the rack (30).
